# EUROPÄISCHE PATENTANMELDUNG

(11) **EP 3 718 393 A1**
(43) Veröffentlichungstag der Anmeldung: **07.10.2020**
(21) Anmeldenummer: 20000139.4
(22) Anmeldetag: 26.03.2020
(51) Int. Cl.: A01G 7/02, A01G 9/02, A01G 9/12, A01G 9/16, A01G 17/04

(54) **MODULARES PFLANZSYSTEM**

(30) Priorität: 27.06.2019 DE 202019002763 U; 29.03.2019 DE 202019001477 U
(71) Anmelder: Boßlet, Tuna, 12439 Berlin (DE); Boßlet, Eberhard, 12439 Berlin (DE)
(72) Erfinder: Boßlet, Tuna, 12439 Berlin (DE); Boßlet, Eberhard, 12439 Berlin (DE)

(57) **Zusammenfassung**

Die Erfindung betrifft ein modulares Pflanzsystem (100) bzw. einen Pflanzturm (100). Dieser enthält eine integrale in Einzelteile zerlegbare Profilrohr-Stecksystem-Struktur (102), einen Topf (104) aus einem wasserundurchlässigen Material und ein Bewässerungseinsatzelement (106) für kapillar-absorbtions Bewässerung von unten. Die Profilrohr-Stecksystem-Struktur (102) enthält eine Mehrzahl an hohlen zusammensteckbaren Profilrohren (112, 112', 114, 114'), die einen Rahmen des modularen Pflanzsystems (100; 100') bilden. Der Topf (104) ist ausgebildet zum Aufnehmen von Wasser und Pflanzsubstrat. Der Topf (104) und das Bewässerungseinsatzelement (106) sind derart aufeinander angepasst, dass das Bewässerungseinsatzelement (106) innerhalb des Topfs (104) angeordnet werden kann. Die Profilrohr-Stecksystem-Struktur (102) und der Topf (104) sind ferner derart aufeinander angepasst, dass der Topf (104) in einem zusammengesetzten Zustand der Profilrohr-Stecksystem-Struktur (102) innerhalb der Profilrohr-Stecksystem-Struktur (102) angeordnet werden kann. Der Pflanzturm ist besonders geeignet um hochwaschende Pflanzen, wie beispielsweise Tomatenpflanzen zu wachsen und zeichnet sich durch eine hohe Standfestigkeit aus.

## Beschreibung

Die Erfindung betrifft ein modulares Pflanzsystem. Insbesondere betrifft die Erfindung ein modulares Pflanzsystem bzw. einen Pflanzenturm für hochwachsende Pflanzen und Kletterpflanzen, die eine vertikal stützende Wachstumshilfe benötigen.

Pflanzsysteme für hochwachsende Pflanzen und Kletterpflanzen sind aus dem Stand der Technik, insbesondere aus der Offenlegungsschrift DE 100 28 622 A1 in Form eines Pflanzenbehälter mit Vorrichtungen zur Verbindung mit einer mobilen Unterkonstruktion am Behälterboden und mit einer vertikalen Rankhilfe, bekannt.

Ziel der Erfindung ist es ein verbessertes modulares Pflanzsystem zu schaffen.

Erfindungsgemäß wird dieses Ziel von einem modularen Pflanzsystem mit einer integralen in Einzelteile zerlegbaren Profilrohr-Stecksystem-Struktur, einem Topf aus einem wasserundurchlässigen Material und einem Bewässerungseinsatzelement erreicht. Die Profilrohr-Stecksystem-Struktur enthält eine Mehrzahl an hohlen zusammensteckbaren Profilrohren, die einen Rahmen des modularen Pflanzsystems bilden. Der Topf ist ausgebildet Wasser und Pflanzsubstrat aufzunehmen. Das Bewässerungseinsatzelement ist für kapillar-absorbtions Bewässerung von unten ausgebildet. Der Topf und das Bewässerungseinsatzelement sind derart aufeinander angepasst, dass das Bewässerungseinsatzelement innerhalb des Topfs angeordnet werden kann. Die Profilrohr-Stecksystem-Struktur und der Topf sind derart aufeinander angepasst, dass der Topf in einem zusammengesetzten Zustand der Profilrohr-Stecksystem-Struktur innerhalb der Profilrohr-Stecksystem-Struktur angeordnet werden kann.

Die Erfindung schließt die Erkenntnis ein, dass bekannte Pflanzsysteme für hochwachsende Pflanzen wenig stabil stehen bzw. wenig standfest sind. Dadurch, dass die Profilrohre einen Rahmen des modularen Pflanzsystems bilden und der Topf für das Aufnehmen des Wassers und des Pflanzsubstrats im zusammengesetzten Zustand innerhalb der Profilrohr-Stecksystem-Struktur angeordnet ist, kann die Standfestigkeit des Pflanzsystems erhöht werden, da ein Schwerpunkt des modularen Pflanzsystems, insbesondere, wenn der Topf mit Wasser und Pflanzsubstrat befüllt ist, innerhalb der Profilrohr-Stecksystem-Struktur liegt. Ferner ermöglicht dies auch, dass eine integrale Rankehilfe aus der Profilrohr-Stecksystem-Struktur selbst heraus bereitgestellt werden kann.

Die Profilrohr-Stecksystem-Struktur kann bei einer hohen Standfestigkeit genügend Raum in der Höhe bereitstellen, um hoch wachsende Pflanzen aufzunehmen und zu stützen.

Das Vorsehen einer in integralen in Einzelteile zerlegbaren Profilrohr-Stecksystem-Struktur ermöglicht es das modulare Pflanzsystem mit wenigen Handgriffen auf- und abzubauen.

Da die Profilrohr-Stecksystem-Struktur von hohlen zusammensteckbaren Profilrohren gebildet wird, kann die Profilrohr-Stecksystem-Struktur ein geringes Gewicht haben. Dies kann es ermöglichen das Gewicht des modularen Pflanzsystems gegenüber aus dem Stand der Technik bekannten Pflanzsystemen zu verringern.

Das Vorsehen von hohlen zusammensteckbaren Profilrohren kann ferner zusätzlich zum Reduzieren des Gewichts des Pflanzsystems auch Lager- und Transportvolumen reduzieren.

Die Profilrohr-Stecksystem-Struktur kann beispielsweise eine quaderförmige Struktur haben. Die Profilrohr-Stecksystem-Struktur kann zwei oder mehr Bereiche, beispielsweise acht oder neun Bereiche aufweisen. Die Profilrohr-Stecksystem-Struktur kann jeweils vier oder mehr vertikal angeordneten Profilrohre pro Bereich aufweisen, die eine Grenze des jeweiligen Bereichs definieren. Im Fall der quaderförmigen Struktur hat die Profilrohr-Stecksystem-Struktur jeweils vier vertikal angeordnete Profilrohre pro Bereich. Die vertikal angeordneten Profilrohre verschiedener Bereiche können verschieden lang sein. Bevorzugt sind die vertikal angeordneten Profilrohre eines Bereichs gleich lang. Besonders bevorzugt sind die vertikal angeordneten Profilrohre eines Bereichs parallel zueinander angeordnet.

Ein Bereich kann vier oder mehr horizontal angeordnete Profilrohre aufweisen, die die vertikal angeordneten Profilrohre in einer Ebene miteinander verbinden. Die horizontal angeordneten Profilrohre eines Bereichs können unterschiedlich lang sein. Bevorzugt sind wenigstens zwei sich gegenüberliegende horizontal angeordnete Profilrohre gleich lang. Besonders bevorzugt sind die horizontal angeordneten Profilrohre zueinander parallel angeordnet. Die horizontal angeordneten Profilrohre können senkrecht zu den vertikal angeordneten Profilrohren angeordnet sein. Ein Bereich kann eine oder zwei Ebenen enthalten. Bevorzugt enthält ein unterster Bereich oder ein oberster Bereich der Profilrohr-Stecksystem-Struktur zwei Ebenen. Ein jeweiliger Bereich kann einem Volumen entsprechen, das durch die Anordnung von einer Anzahl von vertikal angeordneten Profilrohren und horizontal angeordneten Profilrohren begrenzt ist. Solche Strukturen der Profilrohr-Stecksystem-Struktur ermöglichen eine einfache und kompakte Profilrohr-Stecksystem-Struktur bereitzustellen.

Die Profilrohr-Stecksystem-Struktur kann einen oder mehrere Abschnitte aufweisen. Jeder Abschnitt kann einen oder mehrere Bereiche enthalten. Bevorzugt sind die Abschnitte in vertikale Richtung gleich lang. Besonders bevorzugt haben die Abschnitte jeweils ein identisches Volumen.

Ein unterster Abschnitt der Profilrohr-Stecksystem-Struktur kann für die Aufnahme des Topfs ausgebildet sein. Der unterste Abschnitt der Profilrohr-Stecksystem-Struktur kann zwei oder mehr Bereiche, beispielsweise vier oder fünf Bereiche aufweisen. Die Länge der vertikal angeordneten Profilrohre im untersten Abschnitt ist bevorzugt kürzer als die Länge der vertikal angeordneten Profilrohre in anderen Abschnitten. Beispielsweise kann die Länge der vertikal angeordneten Profilrohre im untersten Abschnitt ein Fünftel der Länge der vertikal angeordneten Profilrohre in anderen Abschnitten haben. Dadurch ist ein vertikaler Abstand zwischen benachbarten Ebenen im untersten Abschnitt geringer als für andere Abschnitte. Dies kann eine bessere Befestigung des Topfs innerhalb der Profilrohr-Stecksystem-Struktur ermöglichen.

Das modulare Pflanzsystem kann eine Umhausung aufweisen. Die Umhausung kann zum Abhalten von Feuchtigkeit von Außen und zum Erzeugen eines Frühbeetwachstumsklimas ausgebildet sein. Die Umhausung kann aus einem wasserundurchlässigen Material bestehen. Die Umhausung kann beispielsweise einen Deckel und mehrere Seitenwände, beispielsweise drei oder vier Seitenwände aufweisen. Eine der Seitenwände kann als Rückwand dienen und/oder eine der Seitenwände kann als Frontwand dienen. Abmessungen des Deckels und der Seitenwände können an die Abmessungen der Profilrohr-Stecksystem-Struktur angepasst sein, damit diese die Profilrohr-Stecksystem-Struktur vollständig bedecken können. Dies kann es ermöglichen, beispielsweise, wenn die Umhausung mit dem Deckel und vier Seitenwänden an der Profilrohr-Stecksystem-Struktur angebracht ist, einen von der Profilrohr-Stecksystem-Struktur umschlossenen Innenraum vollständig von der Umgebung abzutrennen. Auch für den Fall, dass drei oder zwei Seitenwände vorhanden sind, kann ein verbesserter Schutz vor Regen ermöglicht werden. Ferner kann die Umhausung es ermöglichen ein Frühbeetklima zu schaffen und die wachsenden Pflanzen vor Feuchtigkeit und Regen zu schützen, was beispielsweise bei Tomatenpflanzen wichtig ist, da diese kein Wasser von oben vertragen.

Die Umhausung kann Öffnungen zum Zuführen von Wasser an einem oberen Ende des modularen Pflanzsystems in die Profilrohr-Stecksystem-Struktur aufweisen. Die Profilrohr-Stecksystems-Struktur kann auf einer Höhe unterhalb des Bewässerungseinsatzelements Öffnungen zum Zuführen des Wassers in den Topf aufweisen, so dass das Wasser über das Bewässerungseinsatzelement für kapillar-absorbtions Bewässerung von unten verwendbar ist. Dies ermöglicht es von oben auf die Umhausung fallendes Wasser, beispielsweise Regenwasser, zur Bewässerung von Pflanzen von unten zu verwenden.

Das Material des Topfs kann ein flexibles wasserundurchlässiges Material sein.

Der Topf kann aus mehreren Teilen, beispielsweise Platten, zusammensetzbar sein. Die Platten können Seitenwände und einen Boden des Topfs bilden. Die Platten können miteinander verbindbar, beispielsweise ineinander einsteckbar sein. Beispielsweise kann auch eine Platte als Boden in die Profilrohr-Stecksystem-Struktur eingelegt und die anderen Platten an einer Ebene der Profilrohr-Stecksystem-Struktur eingehangen werden. Der Topf kann von den Platten gebildet sein.

Der Topf kann alternativ ein Sack sein. Der Sack kann eine auf die Profilrohr-Stecksystem-Struktur anpassbare Form haben. Beispielsweise kann sich die Form des Sacks durch Anbringen innerhalb der Profilrohr-Stecksystem-Struktur und Befüllen mit Pflanzsubstrat und Wasser einer durch die Profilrohr-Stecksystem-Struktur vorgegebenen Form anpassen.

Der Topf kann faltbar sein. Dies kann es ermöglichen den Platzbedarf des modularen Pflanzsystems für die Lagerung und den Transport weiter zu verringern. Im Fall, dass der Topf aus mehreren Teilen zusammensetzbar ist, können die Teile faltbar sein und/oder der Topf im zusammengesetzten Zustand faltbar sein. Beispielsweise können die Platten faltbar sein. Auch der Sack kann faltbar sein.

Das modulare Pflanzsystem kann auf Rädern oder Lenkrollen stehen, so dass das modulare Pflanzsystem mobil ist. Dies ermöglicht es die Mobilität des modularen Pflanzsystems weiter zu erhöhen.

Die hohlen Profilrohre der Profilrohr-Stecksystem-Struktur und/oder die Profilrohr-Stecksystem-Struktur können derart ausgebildet sein, dass die Profilrohr-Stecksystem-Struktur im Betrieb des Pflanzsystems ein geringeres Gewicht hat, als der mit Pflanzsubstrat und Wasser befüllte Topf mit dem Bewässerungseinsatzelement. Hierdurch kann der Schwerpunkt des modularen Pflanzsystems im untersten Abschnitt der Profilrohr-Stecksystem-Struktur bzw. in der Nähe eines unteren Endes des modularen Pflanzsystems, beispielsweise am Boden des modularen Pflanzsystems liegen.

Die Profilrohr-Stecksystem-Struktur, der Topf und das Bewässerungseinsatzelement können eine Einheit bilden, deren Schwerpunkt im Betrieb durch Zufüllen von Wasser und Pflanzsubstrat in den Topf an einem Boden der Einheit liegt. Dies kann es ermöglichen die Standfestigkeit des modularen Pflanzsystems weiter zu erhöhen.

Die Profilrohr-Stecksystem-Struktur kann eine von einem oder mehreren Profilrohren gebildete oberhalb des Topfs angeordnete Zwischenebene der Profilrohr-Stecksystem-Struktur aufweisen, wenn der Topf in der Profilrohr-Stecksystem-Struktur angeordnet ist. Die Zwischenebene kann es ermöglichen die Stabilität des modularen Pflanzsystems und dessen Standfestigkeit zu erhöhen. Ferner kann die Zwischenebene als Rankhilfe für im Pflanzsystem wachsende Pflanzen dienen. Die Zwischenebene kann beispielsweise vier oder mehr, z.B. fünf oder sechs, horizontal angeordnete Profilrohre aufweisen. Vier der horizontal angeordneten Profilrohre können jeweils zwei der vertikal angeordneten Profilrohre der Profilrohr-Stecksystem-Struktur miteinander verbinden. Weitere horizontal angeordnete Profilrohre, z.B. das fünfte und sechste horizontal angeordnete Profilrohr, können zwei der horizontal angeordneten Profilrohre miteinander verbinden. Dies ermöglicht es innerhalb der Profilrohr-Stecksystem-Struktur zusätzliche Rankhilfen und Möglichkeiten für die Befestigung weiterer Rankhilfen, wie beispielsweise sich von den weiteren horizontal angeordneten Profilrohren aus erstreckende Seile anzuordnen.

Das modulare Pflanzsystem kann eine oder mehrere sich vom oberen Ende der Profilrohr-Stecksystem-Struktur nach unten erstreckende Rankhilfen aufweisen, die an der Zwischenebene befestigt sind. Die Rankhilfen können beispielsweise Seile, z.B. Stahlseile oder Seile aus einem anderen Material sein. Die Rankhilfen können auch Schnüre sein. Dies kann es ermöglichen eine verbesserte Rankhilfe für innerhalb der Profilrohr-Stecksystem-Struktur wachsende Pflanzen bereitzustellen. Bevorzugt sind die Rankhilfen an einem der weiteren horizontal angeordneten Profilrohre, die zwei der horizontal angeordneten Profilrohre miteinander verbinden angeordnet. Dies ermöglicht es das Wachstum der Pflanze innerhalb der Profilrohr-Stecksystem-Struktur zu unterstützten, um so ein Wachstum zu vermeiden, dass den Schwerpunkt nach außen verlagern könnte.

Das Pflanzsystem kann eine Husse aufweisen. Die Husse ermöglicht es den von der Profilrohr-Stecksystem-Struktur gebildeten Innenraum von der Umgebung abzutrennen. Die Profilrohr-Stecksystem-Struktur ermöglicht es die Husse leicht am modularen Pflanzsystem zu befestigen bzw. dem modularen Pflanzsystem überzustülpen. Die Husse kann eine Regenschutzhülle sein, die aus einem wasserundurchlässigem Material besteht. Die Husse kann es ermöglichen den von der Profilrohr-Stecksystem-Struktur gebildeten Innenraum vor Regen zu schützen. Das Material der Husse kann alternativ oder zusätzlich flexibel sein, so dass sich die Form der Husse der Form der Profilrohr-Stecksystem-Struktur anpassen kann.

Ein unterster Abschnitt der Profilrohr-Stecksystem-Struktur kann zwischen einem Fünftel und einem Viertel der Länge der Profilrohr-Stecksystem-Struktur einnehmen. Der unterste Abschnitt kann ausgebildet sein den Topf aufzunehmen. Dies ermöglicht es die Standfestigkeit des modularen Pflanzsystems zu erhöhen. Der unterste Abschnitt und der Topf können derart aufeinander angepasst sein, dass der Topf mehr als die Hälfte des Volumens des untersten Abschnitts einnimmt. Alternativ oder zusätzlich können der unterste Abschnitt und der Topf derart aufeinander angepasst sein, dass der Topf formschlüssig in den untersten Abschnitt eingefügt werden kann. Dies kann die Anordnung des Topfs innerhalb der Profilrohr-Stecksystem-Struktur verbessern.

Der unterste Abschnitt und der Topf können derart aufeinander angepasst sein, dass der Topf wenigstens vier Fünftel des Volumens des untersten Abschnitts einnimmt. Dies kann die Standfestigkeit des modularen Pflanzsystems verbessern.

Die Profilrohr-Stecksystem-Struktur kann ausgebildet sein, nebeneinanderstehende modulare Pflanzsysteme miteinander zu verkoppeln, um so eine Pergola herzustellen. Dies ermöglicht es nicht nur einen Pflanzturm, sondern auch größere miteinander verbundene Strukturen, wie eine Pergola bereitzustellen.

Alternativ lässt sich ein Aspekt der Erfindung wie folgt beschreiben als ein aus Einzelteilen zusammensetzbarer Pflanzenturm mit integraler Rankestruktur, flexiblem Substrattrog und Selbstbewässerung von unten, besonders geeignet für hochwachsende Pflanzen und Kletterpflanzen die eine vertikal stützende Wachstumshilfe benötigen.

Ferner betrifft die Erfindung eine Pergola. Die Pergola enthält zwei oder mehr modulare Pflanzsysteme gemäß Anspruch 12 oder einer entsprechenden Ausgestaltung des modularen Pflanzsystems. Jeweils zwei oder mehr der modularen Pflanzsysteme sind nebeneinander angeordnet und miteinander verkoppelt. Die modularen Pflanzsysteme können miteinander über zwei oder mehr Profilrohre zusammengesteckt sein. Die Anordnung mehrerer modularer Pflanzsysteme in einer Pergola ermöglicht es größere zusammengesteckte Strukturen zu erschaffen und so Synergieeffekte bei der Bewirtschaftung zu erzielen. Beispielsweise kann ein Klimatisierungssystem für die mehreren modularen Pflanzsysteme gemeinsam verwendet werden.

Die modularen Pflanzsysteme können an ihren jeweiligen oberen Enden miteinander über zwei oder mehr Profilrohre der Profilrohr-Stecksystem-Struktur zusammengesteckt sein. Alternativ oder zusätzlich können die modularen Pflanzsysteme an ihren jeweiligen unteren Enden miteinander über zwei oder mehr Profilrohre der Profilrohr-Stecksystem-Struktur zusammengesteckt sein. Dies ermöglicht es die Pergola zu betreten, ohne dass horizontal angeordnete Profilrohre den Zugang blockieren.

Wenigstens zwei der modularen Pflanzsysteme können eine Umhausung aufweisen. Die modularen Pflanzsysteme und die Umhausung können derart angeordnet sein, dass sie eine nach außen geschlossene Pergola erzeugen. Die nach außen geschlossene Pergola kann als Gewächshaus dienen. Um die nach außen geschlossene Pergola betreten zu können kann beispielsweise wenigstens eine Umhausung der Pergola eine Tür enthalten.

Die Pergola kann ein Klimatisierungssystem bzw. ein Klimaregulierungssystem aufweisen. Das Klimaregulierungssystem kann ausgebildet sein verschiedene Klimaparameter, wie beispielsweise eine Temperatur und eine Luftfeuchtigkeit innerhalb der von der Umhausung geschlossenen Pergola zu regulieren. Das Klimaregulierungssystem kann beispielsweise eine Regelungseinheit und ein Temperaturveränderungselement oder Lüftungselement enthalten. Die Regelungseinheit kann ausgebildet sein das Temperaturveränderungselement und/oder das Lüftungselement zu steuern, um das Klima innerhalb der von der Umhausung geschlossenen Pergola zu regulieren. Das Temperaturveränderungselement kann ausgebildet sein eine Temperatur zu erhöhen oder zu erniedrigen. Das Temperaturveränderungselement kann ein Heizelement zum Erhöhen einer Umgebungstemperatur und ein Kühlelement zum Verringern der Umgebungstemperatur aufweisen. Das Lüftungselement kann einen Lüfter aufweisen. Das Lüftungselement kann die Pergola mit einer Außenumgebung verbinden, zum Beispiel in Form eines in einer Öffnung der Umhausung angeordneten Lüfters. Das Lüftungselement kann ferner mit einem Wasserspeicher verbunden sein, um eine Luftfeuchte innerhalb der von der Umhausung geschlossenen Pergola zu regulieren.

Das Klimaregulierungssystem kann eine Sende-Empfangs-Einheit aufweisen. Das Klimaregulierungssystem kann über die Sende-Empfangs-Einheit mit Hilfe einer Fernbedienungseinheit, beispielsweise einer Fernbedienung, einem Mobiltelefon oder dergleichen von einem Nutzer gesteuert werden.

In anderen Ausgestaltungen ist Folgendes vorgesehen:
1. Pflanzenturm mit integraler Rankestruktur und Selbstbewässerung wobei der Pflanzturm aus einem integralen Profilrohr-Stecksystem-Struktur besteht Gewicht, Lager- und Transportvolumen reduzierend ist und besonders für Hochwachsende- und Kletterpflanzen geeignet ist, der Pflanztopf aus flexiblen wasserundurchlässigem Material besteht und faltbar ist, Wasser und ein Einsatzelement für kapillar-absorbtions Bewässerung von unten sowie das Pflanzsubstrat aufnimmt, eine Umhausung hat um Feuchtigkeit von Außen abzuhalten und ein Frühbeetwachstumsklima zu ermöglichen, auf Rädern steht und modular additiv zu einer Pergola ausbaufähig ist.
2. Integrale Profilrohr-Stecksystem-Struktur wobei die Struktur mit dem Pflanztopf und dem unterflur Bewässerungseinsatz eine Einheit bildet, durch Wasser und Pflanzsubstrat der Schwerpunkt am Boden liegt und somit umsturzhemmend ist, sich die Profilrohr-Stecksystem-Struktur in Einzelteile zerlegen lässt und dadurch Gewicht, Lager und Transportvolumen reduziert.
3. Pflanztopf aus flexiblen wasserundurchlässigem Material wobei dieser faltbar ist und dadurch Gewicht, Lager und Transportvolumen reduziert.
4. Kapillar-absorbtions Einsatzselement wobei in Verbindung mit dem Pflanztopf eine Substratbewässerung von unten möglich ist.
5. Umhausung wobei ein Frühbeetklima geschaffen werden kann und insbesondere für Tomatenpflanzen unverträglich Wasser und/oder Regen von Außen abgehalten wird.
6. Auf Lenkrollen steht wobei der Pflanzturm aus integraler Rankestruktur und Selbstbewässerung durch Räder beweglich/ortsveränderlich bleibt.
7. Mehrere Pflanzentürme zur Pergola werden wobei das Profilrohr-Stecksystem es gestattet mehrere Pflanzentürme nebeneinander stehend, miteinander zu verkoppeln um so eine Pergola herzustellen.

Die Erfindung soll nun anhand von in den Figuren schematisch abgebildeten Ausführungsbeispielen näher erläutert werden. Von den Figuren zeigen:
- Fig. 1: eine schematische Darstellung eines modularen Pflanzsystems bzw. Pflanzenturms mit einer Profilrohr-Stecksystem-Struktur;
- Fig. 2: eine schematische Darstellung eines Topfes mit einem Bewässerungseinsatzelement zum Anordnen innerhalb der Profilrohr-Stecksystem-Struktur des Pflanzsystems;
- Fig. 3: eine schematische Darstellung einer Pergola aus vier modularen Pflanzsystemen;
- Fig. 4: eine schematische Darstellung eines ortsveränderlichen, modular vergrößerbaren Gewächshausgehäuses.

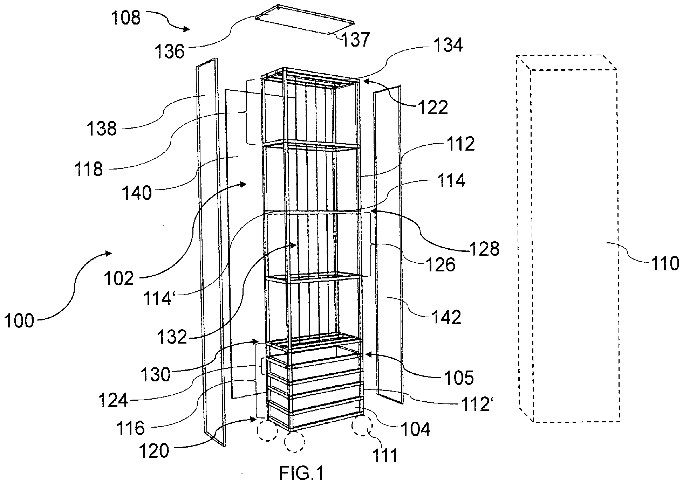

In Fig. 1 ist ein modulares Pflanzsystem bzw. ein Pflanzenturm 100 dargestellt. Der Pflanzenturm 100 hat ein geringes Gewicht und geringes Lager- und Transportvolumen. Der Pflanzenzturm 100 ist standfest und besonders für das Wachsen von hochwachsenden Kletterpflanzen, beispielsweise Tomatenpflanzen, geeignet.

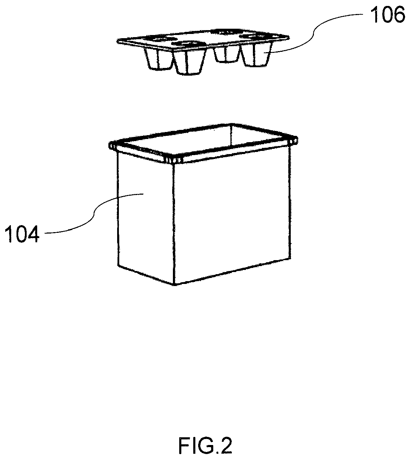

Der Pflanzenturm 100 enthält eine integrale in Einzelteile zerlegbare Profilrohr-Stecksystem-Struktur 102, einen Topf 104, ein Bewässerungseinsatzelement 106 (vgl. Fig. 2), eine Umhausung 108, eine Husse 110 und Räder 111. Die Umhausung 108, die Husse 110 und die Räder 111 sind optional. Der Pflanzenzturm 100 ist in Fig. 1 in einem zusammengesetzten Zustand gezeigt. Im zusammengesetzten Zustand ist das Bewässerungseinsatzelement 106 innerhalb des Topfs 104 und der Topf 104 innerhalb der Profilrohr-Stecksystem-Struktur 102 angeordnet.

Die Profilrohr-Stecksystem-Struktur 102 enthält eine Mehrzahl an hohlen zusammensteckbaren vertikal angeordneten Profilrohren 112, 112' und horizontal angeordneten Profilrohren 114, 114'. Im zusammengesetzten Zustand sind die Profilrohre 112, 112', 114 und 114 zur Profilrohr-Stecksystem-Struktur 102 zusammengesteckt. Die Profilrohre 112, 112', 114 und 114' bilden dann einen Rahmen des Pflanzenturms 100.

In diesem Ausführungsbeispiel hat die Profilrohr-Stecksystem-Struktur 102 eine quaderförmige Struktur. In anderen Ausführungsbeispielen kann sie auch eine andere Form haben, beispielsweise eine Prismenform mit sechseckiger Grundfläche.

Die Profilrohr-Stecksystem-Struktur 102 hat in diesem Ausführungsbeispiel fünf gleich lange Abschnitte, unter anderem einen untersten Abschnitt 116 und einen obersten Abschnitt 118. Die Abschnitte erstrecken sich zwischen einem unteren Ende 120 der Profilrohr-Stecksystem-Struktur 102 und einem oberen Ende 122 und umschließen jeweils ein gleich großes Volumen. Der unterste Abschnitt 116 nimmt daher ein Fünftel der Länge und ein Fünftel des gesamten Volumens der Profilrohr-Stecksystem-Struktur 102 ein. In anderen Ausführungsbeispielen kann der unterste Abschnitt auch eine andere Länge oder ein anderes Volumen, beispielsweise ein Viertel der Gesamtlänge bzw. des Gesamtvolumens der Profilrohr-Stecksystems-Struktur einnehmen.

In diesem Ausführungsbeispiel enthält der unterste Abschnitt 116 fünf Bereiche 124, während die anderen Abschnitte jeweils nur einen Bereich enthalten. Somit enthält die Profilrohr-Stecksystem-Struktur 102 in diesem Ausführungsbeispiel insgesamt neun Bereiche. In anderen Ausführungsbeispielen kann die Profilrohr-Stecksystem-Struktur auch eine andere Anzahl an Bereichen und/oder Abschnitten haben.

Jeder Bereich hat vier vertikal angeordnete Profilrohre 112 oder 112', die eine Grenze des jeweiligen Bereichs definieren. Die vertikal angeordneten Profilrohre 112, 112' sind jeweils zu den anderen vertikal angeordneten Profilrohren 112, 112' des Bereichs parallel angeordnet. Ferner hat jeder der Bereiche mindestens vier horizontal angeordnete Profilrohre 114 und 114', die senkrecht zu den vertikal angeordneten Profilrohren 112 und 112' angeordnet sind und die vertikal angeordneten Profilrohre in einer Ebene miteinander verbinden. Beispielsweise enthält ein mittlerer Abschnitt 126 an seinem oberen Ende eine Ebene 128. Die horizontal angeordneten Profilrohre 114' sind in horizontale Richtung kürzer als die horizontal angeordneten Profilrohre 114. Ein unterster Bereich des untersten Abschnitts 116 hat in diesem Ausführungsbeispiel acht horizontal angeordnete Profilrohre 114 und 114' von denen vier horizontal angeordnete Profilrohre 114 und 114' das untere Ende 120 der Profilrohr-Stecksystem-Struktur 102 bilden. Der unterste Bereich enthält somit im Gegensatz zu den anderen Bereichen, die nur eine Ebene haben, zwei Ebenen.

Die Profilrohr-Stecksystem-Struktur 102 und der Topf 104 sind derart aufeinander angepasst, dass der Topf 104 im zusammengesetzten Zustand der Profilrohr-Stecksystem-Struktur 102 innerhalb der Profilrohr-Stecksystem-Struktur 102 angeordnet werden kann.

Hierfür ist der unterste Abschnitt 116 ausgebildet den Topf 104 aufzunehmen. Der unterste Abschnitt 116 hat 5 Bereiche, die von den kurzen vertikal angeordneten Profilrohren 112' definiert werden. In diesem Ausführungsbeispiel haben die vertikal angeordneten Profilrohre 112' ein Fünftel der Länge der vertikal angeordneten Profilrohre 112. Dadurch ist ein vertikaler Abstand zwischen benachbarten Ebenen im untersten Abschnitt 106 geringer als für die anderen Abschnitte und der Topf 104 kann besser innerhalb der Profilrohr-Stecksystem-Struktur 102 gehalten werden. Ferner sind der unterste Abschnitt 116 und der Topf 104 derart aufeinander angepasst, dass der Topf 104 vier Fünftel des Volumens des untersten Abschnitts 116 einnimmt. Der Topf 104 endet somit an der Ebene 105.

Die Profilrohr-Stecksystem-Struktur 102, der Topf 104 und das Bewässerungseinsatzelement 106 bilden eine Einheit, deren Schwerpunkt im Betrieb durch Zufüllen von Wasser und Pflanzsubstrat in den Topf 104 an einem Boden der Einheit liegt. Dies ermöglicht es die Standfestigkeit des Pflanzturms 100 sicherzustellen. In anderen Ausführungsbeispielen kann sich der Schwerpunkt innerhalb der Profilrohr-Stecksystem-Struktur befinden, muss sich jedoch nicht zwingend am Boden befinden.

Oberhalb des Topfs 104 befindet sich am oberen Ende des untersten Abschnitts 116 eine Zwischenebene 130. Die Zwischenebene 130 wird von den vier horizontal angeordneten Profilrohren 114 und 114', sowie zwei zusätzlichen horizontal angeordneten Profilrohren 114 gebildet. Die zwei zusätzlichen horizontal angeordneten Profilrohre 114 verbinden die zwei sich gegenüberliegenden horizontal angeordneten Profilrohre 114' der Ebene und schaffen so eine zusätzliche innerhalb der Profilrohr-Stecksystem-Struktur 102 liegende Rankhilfe.

Ferner enden an jedem der zusätzlichen horizontal angeordneten Profilrohre 114 zwei Rankhilfen in Form eines jeweiligen Stahlseils 132, das sich vom oberen Ende 122 der Profilrohr-Stecksystem-Struktur 102 nach unten erstreckt und an dem jeweiligen zusätzlichem horizontal angeordneten Profilrohr 114 der Zwischenebene 130 befestigt ist. Am oberen Ende 122 der Profilrohr-Stecksystem-Struktur 102 befindet sich eine Dachebene 134 die aus Profilrohren 114 und 114' entsprechend der Zwischenebene 130 aufgebaut ist. Die Stahlseile 132 ermöglichen somit ein leichteres Wachstum von Pflanzen in die Höhe innerhalb der Profilrohr-Stecksystem-Struktur 102. In anderen Ausführungsbeispielen kann die Zwischenebene auch nur eine oder mehr als zwei zusätzliche horizontal angeordnete Profilrohre aufweisen, die zwei der horizontal angeordneten Profilrohre miteinander verbinden. Auch eine diagonale Verbindung zwischen zwei horizontal angeordneten Profilrohren oder von zwei vertikal angeordneten Profilrohren ist denkbar.

Topf 104 und das Bewässerungseinsatzelement 106 sind in Fig. 2 gezeigt. Der Topf 104 ist aus einem flexiblen wasserundurchlässigen Material. Er dient zum Aufnehmen von Wasser und Pflanzsubstrat. Ferner ist er in diesem Ausführungsbeispiel faltbar, so dass er platzsparend gelagert und transportiert werden kann. Insbesondere, ist der Topf 104 in diesem Ausführungsbeispiel ein Behälter aus einem flexiblen faltbaren Kunststoff.

In anderen Ausführungsbeispielen kann der Topf auch aus mehreren Teilen zusammensetzbar sein, beispielsweise aus mehreren Platten oder ein Sack sein. Die Platten können auch aus einem starren Material sein, d.h., das Material des Topfs ist nur optional ein flexibles Material. Mehrere Platten können zum Beispiel zum Topf zusammengesteckt werden. Im Fall, dass mehrere Platten vorgesehen sind, kann der Topf beispielsweise 4 Seitenwände und eine Bodenplatte aufweisen, die aufeinander angepasste Steckverbindungen vorsehen können, so dass der Topf in einem zusammengesteckten Zustand mit Pflanzensubstrat und Wasser befüllt werden kann und wasserdicht ist.

In einem weiteren Ausführungsbeispiel kann der Topf auch aus einer Bodenplatte und vier Seitenplatten bestehen. Die Seitenplatten können sich an den horizontal angeordneten Profilrohren 114 und 114' der Ebene 105 einhängen lassen.

Das Bewässerungseinsatzelement 106 dient der kapillar-absorbtions Bewässerung von unten. Der Topf 104 und das Bewässerungseinsatzelement 106 sind aufeinander derart angepasst, dass das Bewässerungseinsatzelement 106 innerhalb des Topfs 104 angeordnet werden kann. Eine kapillar-absorbtions Bewässerung von unten ist somit möglich, sofern das Bewässerungseinsatzelement 106 im Topf 104 angeordnet ist und der Topf 104 teilweise mit Wasser befüllt ist.

Das Bewässerungseinsatzelement 106 enthält in diesem Ausführungsbeispiel vier vorgefertigte Ausnehmungen 106 für vier Pflanzen (nicht gezeigt). In anderen Ausführungsbeispielen kann auch eine andere Zahl von Ausnehmungen vorgesehen sein. Am Boden der jeweiligen Ausnehmung ist eine Öffnung vorgesehen, um eine kapillar-absorbtions Bewässerung zu ermöglichen.

Die Umhausung 108 (vgl. Fig. 1) dient zum Abhalten von Feuchtigkeit von Außen und ermöglicht es ein Frühbeetwachstumsklima zu erzeugen. Die Umhausung 108 ist aus einem wasserundurchlässigen Material. In diesem Ausführungsbeispiel hat die Umhausung 108 einen Deckel 136 und drei Seitenwände 138, 140 und 142. Die Seitenwand 140 dient als Rückwand. In anderen Ausführungsbeispielen kann auch eine andere Zahl von Seitenwänden vorgesehen sein, beispielsweise zwei oder vier. Die Abmessungen des Deckels 136 und der Seitenwände 138, 140 und 142 sind derart an die Abmessungen der Profilrohr-Stecksystem-Struktur 102 angepasst, dass diese die Profilrohr-Stecksystem-Struktur 102 derart bedecken, dass kein Wasser ungewollt in den von der Profilrohr-Stecksystem-Struktur 102 umschlossenen Raum eindringt. In diesem Ausführungsbeispiel hat die Umhausung 108, insbesondere der Deckel 136 an seinen vier Ecken eine jeweilige Öffnung 137 zum Zuführen von Wasser in die Profilrohr-Stecksystem-Struktur 102. Hierfür sind die vertikal angeordneten Profilrohre 112 des obersten Abschnitts 118 an ihrem oberen Ende offen, so dass Wasser durch die Öffnungen 137 des Deckels 136 in die vertikal angeordneten Profilrohre 112 fließen kann. Ferner hat die Profilrohr-Stecksystem-Struktur 102 auf einer Höhe unterhalb des Bewässerungseinsatzelements 106 Öffnungen zum Zuführen des Wassers in den Topf 104 (nicht gezeigt), so dass das Wasser über das Bewässerungseinsatzelement 106 für kapillar-absorbtions Bewässerung von unten verwendbar ist. Die Profilrohr-Stecksystem-Struktur 102 kann somit als zusätzlicher Wasserspeicher dienen und z.B. Regenwasser aufnehmen und speichern. Die Öffnungen 137 im Deckel und die Öffnungen zum Zuführen des Wassers in den Topf 104 in der Profilrohr-Stecksystem-Struktur 102 sind optional.

Die Räder 111 sind unten an der Profilrohr-Stecksystem-Struktur 102 angebracht und ermöglichen ein einfaches Verschieben des Pflanzturms 100. Dies macht den Pflanzturm 100 mobil, ohne, dass er ab- und wieder aufgebaut werden muss. Somit ist das Pflanzsystem gut ortsveränderlich. Anstatt Räder können auch Lenkrollen oder andere Mittel zur Fortbewegung des modularen Pflanzsystems vorgesehen sein, beispielsweise Ketten oder Walzen.

Die optionale Husse 110 fungiert als Regenschutzhülle und dient dem zusätzlichen Regenschutz. Die Husse 110 ist aus einem wasserundurchlässigen und flexiblem Material, so dass es sich der Form der Profilrohr-Stecksystem-Struktur 102 anpassen kann.

In einem weiteren Ausführungsbeispiel kann die Profilrohr-Stecksystem-Struktur des modulares Pflanzsystems ausgebildet sein nebeneinander stehende modulare Pflanzsysteme miteinander zu verkoppeln, um so eine Pergola herzustellen. Hierfür können horizontal angeordnete Profilrohre zum Verbinden von benachbarten modularen Pflanzsystemen vorgesehen sein. Das Pflanzsystem kann also nicht nur in dem Sinne modular ausgestaltet sein, dass der Pflanzturm an sich variabel, z.B. in der Höhe ist, sondern auch derart, dass weitere modulare Pflanzsystem mit dem modularen Pflanzsystem verbunden werden können und so eine noch größere Struktur, beispielsweise in Form einer Pergola herzustellen.

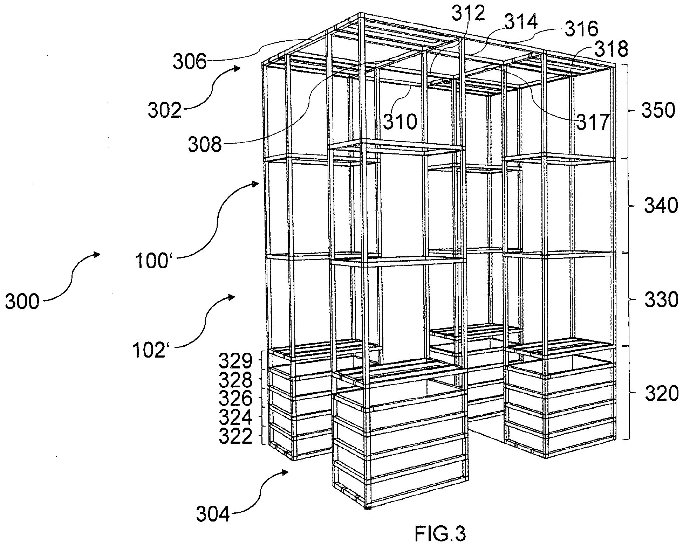

In Fig. 3 ist eine Pergola 300 aus vier nebeneinander angeordneten und über horizontal angeordnete Profilrohre 306, 308, 310, 312, 314, 316, 317 und 318 miteinander verbundenen modularen Pflanzsystemen 100' gezeigt. Die modularen Pflanzsysteme 100' sind ähnlich zu dem in Fig. 1 gezeigten modularen Pflanzsystem 100. Im Gegensatz zu diesem haben die modularen Pflanzsysteme 100' jedoch nur vier anstatt fünf Abschnitte und sind somit etwas kürzer in vertikaler Richtung. In anderen Ausführungsbeispielen können die modularen Pflanzsysteme der Pergola auch eine andere Anzahl an Abschnitten haben. Ferner können in anderen Ausführungsbeispielen auch jeweils zwei oder mehr der modularen Pflanzsysteme nebeneinander angeordnet und miteinander verkoppelt sein.

Die vier Abschnitte 320, 330, 340 und 350 erstrecken sich zwischen einem oberen Ende 302 und einem unteren Ende 304 der Pergola 300. In diesem Ausführungsbeispiel sind die Profilrohr-Stecksystem-Strukturen 102' jeweils zweier benachbarter modularen Pflanzsysteme 100' miteinander über zwei Profilrohre 306 und 308 bzw. 310 und 312 bzw. 314 und 316 bzw. 317 und 318 zusammengesteckt und somit verkoppelt. In anderen Ausführungsbeispielen können die benachbarten modularen Pflanzsysteme auch auf einer anderen Höhe miteinander zusammengesteckt sein, beispielsweise am unteren Ende.

Der unterste Abschnitt 320 der jeweiligen Profilrohr-Stecksystem-Struktur 102' hat im Gegensatz zu den übrigen Abschnitten 330, 340 und 350 fünf Bereiche 322, 324, 326, 328 und 329. Dies ermöglicht es den in das jeweilige modulare Pflanzsystem 100' eingebrachten Topf besser zu halten. Der Topf nimmt vier Fünftel des Volumens des jeweiligen untersten Abschnitts 320 ein.

Die Pergola 300 ist nach außen geschlossen. Hierfür haben die modularen Pflanzsysteme 100' Umhausungen (nicht gezeigt). Zudem sind Deckel und Seitenwände der Umhausung für die Bereiche zwischen den benachbarten modularen Pflanzsystemen 100' vorgesehen, um die Pergola 300 vollständig nach außen verschließen zu können.

In einem Ausführungsbeispiel kann eine Seitenwand zwischen zwei modularen Pflanzsystemen durch eine Tür ersetzt sein, so dass die nach außen geschlossene Pergola durch die Tür betreten werden kann, ohne dass eine Seitenwand entfernt werden muss.

In weiteren Ausführungsbeispielen kann eine geschlossene Pergola auch als Gewächshaus dienen. Die Pergola kann in diesem Fall beispielsweise ein Klimatisierungssystem aufweisen, dass ferngesteuert werden kann.

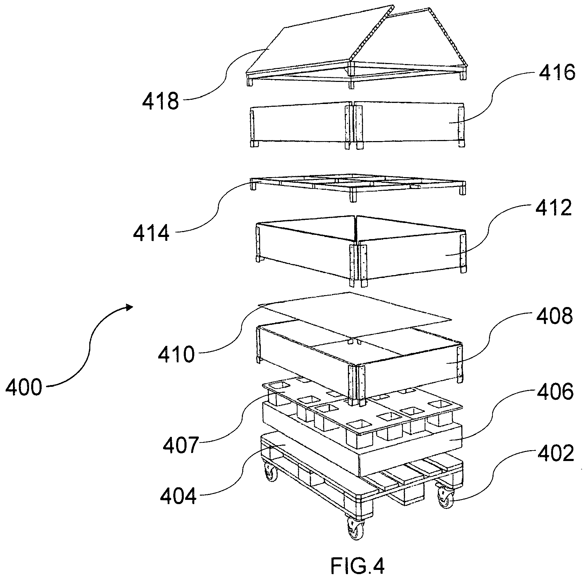

In Fig. 4 ist ein ortsveränderliches, modular vergrößerbares Gewächsgehäuse 400 ähnlich eines kleinen Gewächshauses bzw. Hochbeets bzw Pflanztrogs mit fest installierter Bewässerungseinrichtung, mit Frühbeet- und Gewächshauselementen und Klimakontrolle in einer Explosionsdarstellung gezeigt.

Vorbekannte Gewächshäuser, Früh- und Hochbeete und Pflanztröge üblicher Bauart sind stationär und in ihrer Dimension und unterschiedlichen Funktionen vordefiniert. Ihre jeweiligen Vorzüge sind nicht miteinander kombinierbar.

Ein erfolgreich bewirtschaftetes Gewächshaus, Frühbeet, Hochbeet oder Pflanztrog ergibt sich nicht ohne weiteres und setzt eine tiefere Beschäftigung mit gärtnerischen Techniken voraus, was es einem fachfremdem, anderweitig arbeitstätigem Anwender, nahezu unmöglich macht einen Ertrag bringendes Beet ohne größeren eigenen Zeitaufwand oder externe Dienstleistung zu bauen oder zu installieren und zu pflegen.

Das Gehäuse 400 schafft eine Pflanzeinheit für den urbanen Raum, die ohne gärtnerischen Sachverstand mit einfacher Anleitung zu betreiben ist und weitestgehend ohne manuelle Pflege trotzdem Ertrag liefert. Die grundlegende Schwierigkeit liegt im Anwachsen der Pflanzen, was von zahlreichen Naturfaktoren wie Zeitpunkt der Saat bzw. Pflanzung, Klima, Bewässerung und Bodenbeschaffenheit abhängig ist.

Das Gehäuse 400 ermöglicht es die verschiedenen Eigenschaften und Vorzüge eines Gewächshauses, Frühbeets, Hochbeets und Pflanztrogs zu vereinen und den erforderlichen Aufwand für eine ganzjährige Erzeugung von lebenden Pflanzen im urbanen Kontext zu minimieren. Die Erfindung kann als ein Hybrid von Gewächshaus, Frühbeet, Hochbeet und Pflanztrog verstanden werden.

Das Gehäuse 400 hat Lenkrollen 402, eine Europalette 404, ein Wasserdepot 406 für Bewässerung von unten, ein Einsatzelement 407 für die Bewässerung von unten, einen faltbaren Aufsatzrahmen 408, eine Durchwuchssperre 410, einen faltbaren Aufsatzrahmen 412, einen Bewässerungs- und Ordnungsrahmen 414, einen faltbaren Aufsatzrahmen 416 und Flachdach-Fensterklappen 418.

Die Durchwuchssperre 410 enthält eine Substratheizung. Die faltbaren Aufsatzrahmen 412 und 416 sind transparent und wasserfest. Die Flachdach-Fensterklappen 418 sind um 270 Grad öffenbar.

Das Gehäuse 400 ist als Einheit in einem LKW auf Grund der Dimensionierung nach DIN EN 13698-1 EURO Palette transportabel. Die Lenkrollen 402 machen das Gehäuse 400 ortsveränderlich. Das Wasserdepot 406 für Bewässerung von unten dient zur Unterflurbewässerung. Der faltbare Aufsatzrahmen 408 ist in diesem Ausführungsbeispiel ein Rahmen nach DIN EN 13698-1 aus opakem wasserabweisendem Material. Der faltbare Aufsatzrahmen 408 dient zur Erzeugung von 4 Seitenwände als Beeteinfassung. Die faltbaren Aufsatzrahmen 412 und 416 haben eine Dimensionierung HxBxT = 20x120x80cm. Sie sind aus transparentem wasserfestem Material und dienen zur Erzeugung von 4 Seitenwände. Die faltbaren Aufsatzrahmen 412 und 416 können als additives Element zur Schaffung eines in der Höhe erweiterbarem Gewächshauses dienen.

Die Durchwuchssperre 410 schützt das unterflur Wasserdepot 406 vor eindringenden Wurzeln. Zudem können darüber Substrat und/oder Erde, sowie Saatmatten aufgenommen werden. Dieses Substrat wird mit der Substratheizung (nicht gezeigt) bei Bedarf warm gehalten um auch bei kühlen Außentemperaturen Pflanzenwachstum zu initiieren, welches unter Einsatz von Saatmatten (nicht gezeigt) möglich wird. Dafür braucht es eine gut durchfeuchtete Erde. Das Wasser kommt über in Hohlkammern des faltbaren Aufsatzrahmen 412 aus Hohlkammern-Stegplatten gelegenen Bewässerungsführung (nicht gezeigt) die mittels Gartenschlauch und konventioneller Anschlusskupplung (nicht gezeigt) an die Bewässerungsführung angeschlossen ist. Der Bewässerungs- und Ordnungsrahmen 414 ist optional und kann abgenommen werden. Der Bewässerungs- und Ordnungsrahmen 414 ist passend für DIN EN 13698-1 Aufsatzrahmen 408 und für Aufsatzrahmen 412 und 416. Der Bewässerungs- und Ordnungsrahmen 414 ist in diesem Ausführungsbeispiel ebenfalls mit konventioneller Anschlusskupplung an einen Gartenschlauch angeschlossen (nicht gezeigt).

Modular zu einem Frühbeet ergänzt wird das System mittels der zwei transparenten Flachdach- Fensterklappen 418 zur Beetabdeckung. Die Flachdach- Fensterklappen 418 sind auf zwei Seiten an einem Rundum laufenden Rahmen befestigt und lassen sich um 270 Grad öffnen. Diese ermöglicht das Beet oben komplett zu öffnen und somit einen leichten Zugriff auf die Pflanzen. Zudem kann ein Regeneinfall ermöglicht werden. Um Pflanzenwachstum auch in dunklen Jahreszeiten zu ermöglichen gibt es in die Hohlkammern der verwendeten Stegplatten eingeführtes Pflanzenwachstumslicht (nicht gezeigt).

Mit den vertikal modular stapelbaren Bestandteilen umfassend die Lenkrollen 402, die Europalette 404, das Wasserdepot 406 für Bewässerung von unten, das Einsatzelement 407 für die Bewässerung von unten, den faltbaren Aufsatzrahmen 408, die Durchwuchssperre 410, den faltbaren Aufsatzrahmen 412, den Bewässerungs- und Ordnungsrahmen 414, den faltbaren Aufsatzrahmen 416 und die Flachdach-Fensterklappen 418, wird ein flexibel anwendbarer in sich aufbauender, miteinander funktionierender Hybrid aus Gewächshaus, Frühbeet, Hochbeet und Pflanztrog geschaffen.

Es kann eine Klimasteuerung mittels Sensor und Wifi-Verbindung vorgesehen sein. Es kann ein Wifi Bewässerungsautomat vorgesehen sein. Es kann ein temperaturabhängiger Fensteröffner vorgesehen sein. Es kann eine Online Ferndiagnose und Beratung zum Wachstum vorgesehen sein.

Durch die ergänzende Klimasteuerung mit Sensor im Substrat und einer Wifi-Verbindung zur Steuerung des Bewässerungsautomaten und einer sich temperaturabhängig öffnende und schließende Beetabdeckung wird ein Ganzjahresbetrieb möglich.

Über die Online Ferndiagnose und Beratung des Nutzers zum Wachstum seiner Anpflanzungen rundet sich das Systemangebot ab.

In anderen Ausführungsbeispielen ist Folgendes vorgesehen:
1. Gehäuse aus vertikal modular stapelbare Elementen zur ganzjährigen Erzeugung von lebenden Pflanzen dadurch gekennzeichnet, dass es auf einer EURO-Palette nach DIN EN 13698-1 steht und mit Lenkrollen versehen ortsveränderlich ist, es einen falt- und stapelbaren Aufsatzrahmen nach DIN EN 13698-1 aus opakem wasserabweisendem Material hat, mit einem Wasserdepot für Bewässerung von Unten hat und mit einem Aufsatzrahmen aus transparentem, wasserfestem Material aufstockbar ist, eine Bewässerungsführungen hat, die durch die Hohlkammern von Stegplatten geführt ist (ohne Abbildung), einen abnehmbaren Bewässerungs- und Ordnungsrahmen hat, der für die Modul als Aufsatz passend ist und zusammen mit der Beetabdeckung aus zwei Flachdach-Fensterklappen die seitlich an einem rundum laufendem Rahmen angebrachte sind, als Frühbeetabdeckungen dient und sich vollständig öffnen lassen. In die Beetabdeckung kann ein Pflanzenwachstum förderndes Licht eingeführt sein und somit das Gehäuse aus miteinander kompatiblen Elementen bestehen, die vertikal, modular stabelbar sind.
2. Wasserdepot für Bewässerung von Unten wobei es in einem Aufsatzrahmen eingebettet dem darin befindlichen Wasser ermöglicht über Absoption- und Kapillarwirkung des Substrats die Pflanzen von unten zu versorgen.
3. Falt- und stapelbarer Aufsatzrahmen nach DIN EN 13698-1, EURO Palette wobei Aufsatzrahmen aus transparentem wasserbeständigem Material besteht und sich mit dem opaken Aufsatzrahmen aufeinander stapeln kombinieren lässt.
4. Bewässerungsführung wobei diese durch die Hohlkammern von Stegplatten geführt ist und sich in den Wänden des transparenten, falt- und stapelbarer Aufsatzrahmen befindet.
5. Abnehmbarer Bewässerungs- und Ordnungsrahmen wobei der Rahmen aus Teilen zusammensteckbar ist, eine im Rahmenprofil innenliegende und im Rahmen mittig angeordnete Bewässerungsführung hat und für DIN EN 13698-1 Aufsatzrahmen passend ist, und über seine Gliederung ein Ordnungsraster entsteht womit man die Aussaat mittel Saatmatten oder die Einpflanzungen im Beet zu unterschiedlichen Pflanzengruppen untergliedern kann.
6. Flachdach-Fensterklappen als Frühbeetaufsatz und/oder Beetabdeckung der Frühbeetaufsatz für Aufsatzrahmen DIN EN 13698-1 EURO Palette passt, aus lichtdurchlässigem wasserbeständigem Material ist und aus zwei seitlich an einem Rahmen angebrachte, transparenten Flachdach-Fensterklappen besteht, die sich jeweils um 270 Grad vollständig öffnen lassen, womit das Frühbeet oben komplett offen ist und Regen einfallen kann.
7. Integriertes Pflanzenwachstum förderndes elektrisches Licht wobei das Pflanzenlicht sich in den Hohlkammern von Stegplatten befindet und diese Stegplatten die Beetabdeckung für ein Frühbeet mit Flachdach bilden.
8. Vertikal modular kombinier- und stapelbare Bestandteile des Gehäuses wobei es nach DIN EN 13698-1 EURO für Palette als Basis das Wasserdepot für Bewässerung von Unten der opake Aufsatzrahmen, die Durchwuchssperre und Substratheizung der transparente Aufsatzrahmen der abnehmbarer Bewässerungs- und Ordnungsrahmen der Frühbeetaufsatz und/oder Beetabdeckung sich modular ergänzend kombinieren und stapeln lassen.

## Patentansprüche

1. Modulares Pflanzsystem (100; 100') enthaltend,
- eine integrale in Einzelteile zerlegbare Profilrohr-Stecksystem-Struktur (102) enthaltend eine Mehrzahl an hohlen zusammensteckbaren Profilrohren (112, 112', 114, 114'), die einen Rahmen des modularen Pflanzsystems (100; 100') bilden,
- einen Topf (104) aus einem wasserundurchlässigen Material zum Aufnehmen von Wasser und Pflanzsubstrat und
- ein Bewässerungseinsatzelement (106) für kapillar-absorbtions Bewässerung von unten,
wobei der Topf (104) und das Bewässerungseinsatzelement (106) derart aufeinander angepasst sind, dass das Bewässerungseinsatzelement (106) innerhalb des Topfs (104) angeordnet werden kann und
wobei die Profilrohr-Stecksystem-Struktur (102) und der Topf (104) derart aufeinander angepasst sind, dass der Topf (104) in einem zusammengesetzten Zustand der Profilrohr-Stecksystem-Struktur (102) innerhalb der Profilrohr-Stecksystem-Struktur (102) angeordnet werden kann.

2. Modulares Pflanzsystem (100) nach Anspruch 1, wobei das modulare Pflanzsystem (100) eine Umhausung (108) zum Abhalten von Feuchtigkeit von Außen und zum Erzeugen eines Frühbeetwachstumsklimas aufweist.

3. Modulares Pflanzsystem (100) nach Anspruch 2, wobei die Umhausung (108) Öffnungen (137) zum Zuführen von Wasser an einem oberen Ende (122) des modularen Pflanzsystems (100) in die Profilrohr-Stecksystem-Struktur (102) aufweist und die Profilrohr-Stecksystems-Struktur (102) auf einer Höhe unterhalb des Bewässerungseinsatzelements (106) Öffnungen zum Zuführen des Wassers in den Topf (104) aufweist, so dass das Wasser über das Bewässerungseinsatzelement (106) für kapillar-absorbtions Bewässerung von unten verwendbar ist.

4. Modulares Pflanzsystem (100) nach einem der Ansprüche 1 bis 3, wobei der Topf (104) faltbar und/oder aus mehreren Teilen zusammensetzbar ist.

5. Modulares Pflanzsystem (100) nach einem der Ansprüche 1 bis 4, wobei das modulare Pflanzsystem (100) auf Rädern (111) oder Lenkrollen steht, so dass das modulare Pflanzsystem (100) mobil ist.

6. Modulares Pflanzsystem (100) nach einem der Ansprüche 1 bis 5, wobei die Profilrohr-Stecksystem-Struktur (102), der Topf (104) und das Bewässerungseinsatzelement (106) eine Einheit bilden, deren Schwerpunkt im Betrieb durch Zufüllen von Wasser und Pflanzsubstrat in den Topf (104) an einem Boden der Einheit liegt.

7. Modulares Pflanzsystem (100) nach einem der Ansprüche 1 bis 6, wobei die Profilrohr-Stecksystem-Struktur (102) eine von einem oder mehreren Profilrohren (114) gebildete oberhalb des Topfs (104) angeordnete Zwischenebene (130) der Profilrohr-Stecksystem-Struktur (102) aufweist, wenn der Topf (104) in der Profilrohr-Stecksystem-Struktur (102) angeordnet ist.

8. Modulares Pflanzsystem (100) nach Anspruch 7, wobei das modulare Pflanzsystem (100) eine oder mehrere sich vom oberen Ende (122) der Profilrohr-Stecksystem-Struktur (102) nach unten erstreckende Rankhilfen (132) aufweist, die an der Zwischenebene (130) befestigt sind.

9. Modulares Pflanzsystem (100) nach einem der Ansprüche 1 bis 8, wobei das Pflanzsystem (100) eine Husse (110) aufweist.

10. Modulares Pflanzsystem (100) nach einem der Ansprüche 1 bis 9, wobei ein unterster Abschnitt (116) der Profilrohr-Stecksystem-Struktur (102) zwischen einem Fünftel und einem Viertel der Länge der Profilrohr-Stecksystem-Struktur (102) einnimmt und ausgebildet ist den Topf (104) aufzunehmen.

11. Modulares Pflanzsystem (100) nach Anspruch 10, wobei der unterste Abschnitt (116) und der Topf (104) derart aufeinander angepasst sind, dass der Topf (104) wenigstens vier Fünftel des Volumens des untersten Abschnitts (116) einnimmt.

12. Modulares Pflanzsystem (100') nach einem der Ansprüche 1 bis 11, wobei die Profilrohr-Stecksystem-Struktur (102) ausgebildet ist, nebeneinander stehende modulare Pflanzsysteme (100') miteinander zu verkoppeln, um so eine Pergola (300) herzustellen.

13. Pergola (300) enthaltend
- zwei oder mehr modulare Pflanzsysteme (100') gemäß Anspruch 12,
wobei jeweils zwei oder mehr der modularen Pflanzsysteme (100') nebeneinander angeordnet und miteinander verkoppelt sind.

14. Pergola (300) gemäß Anspruch 13, wobei die modularen Pflanzsysteme (100') an ihren jeweiligen oberen Enden (302) miteinander über zwei oder mehr Profilrohre (306, 308, 310, 312, 314, 316, 317, 318) der Profilrohr-Stecksystem-Struktur (102') zusammengesteckt sind.

15. Pergola (300) gemäß Anspruch 13 oder 14, wobei wenigstens zwei der modularen Pflanzsysteme (102') eine Umhausung (108) aufweisen und die modularen Pflanzsysteme (102') und die Umhausung (108) derart angeordnet sind, dass sie eine nach außen geschlossene Pergola (300) erzeugen.
